# EUROPEAN PATENT APPLICATION

(11) **EP 0 959 126 A1**
(43) Date of publication of application: **24.11.1999**
(21) Application number: 99106857.8
(22) Date of filing: 07.04.1999
(51) Int. Cl.: C12G 1/02

(54) **Wine-making plant and associated method**

(30) Priority: 20.04.1998 IT PC980009
(71) Applicant: CMB S.n.c. di Cassi Angelo & C., 29010 Pianello V.T. PC (IT)
(72) Inventor: Valter, Corrada, 29010 Pianello PC (IT)
(74) Representative: La Ciura, Salvatore

(57) **Abstract**

This invention relates to a wine-making plant which exploits the pressure of the carbon dioxide developed during fermentation to stir the must and cause it to moisten the marc.

In particular, the plant in accordance with the invention comprises:
- a number of sealed containers designed to contain the must
- a set of pipes, each of which connects the bottom of one container to the top of the adjacent container
- a pressure relief valve designed to place the top of each container in communication with the exterior, independently of the other containers.

As stated, this configuration exploits the pressure generated by the fermentation of the must to move part of the must from one container to the next, in which it spills down onto the marc, thus moistening it.

## Description

This invention relates to a wine-making plant which exploits the pressure of the carbon dioxide developed during fermentation to stir the must and cause it to moisten the marc.

In particular, the plant in accordance with the invention comprises:
- a number of sealed containers designed to contain the must
- a set of pipes, each of which connects the bottom of one container to the top of the adjacent container
- a pressure relief valve designed to place the top of each container in communication with the exterior, independently of the other containers.

As stated, this configuration exploits the pressure generated by the fermentation of the must to move part of the must from one container to the next, in which it spills down onto the marc, thus moistening it. One of the stages of the wine-making process involves fermentation of the must in special containers, into which the must is introduced with the marc.

The marc tends to rise to the surface, forming a layer called the "cap" which needs to be periodically moistened with must to ensure that the dyes in the grape skins dissolve and to prevent the risk of acetification of the marc on contact with the air.

Various types of apparatus used for this purpose are known, all of which are open at the top and most of which are fitted with mechanical devices designed to stir the marc and keep it moist.

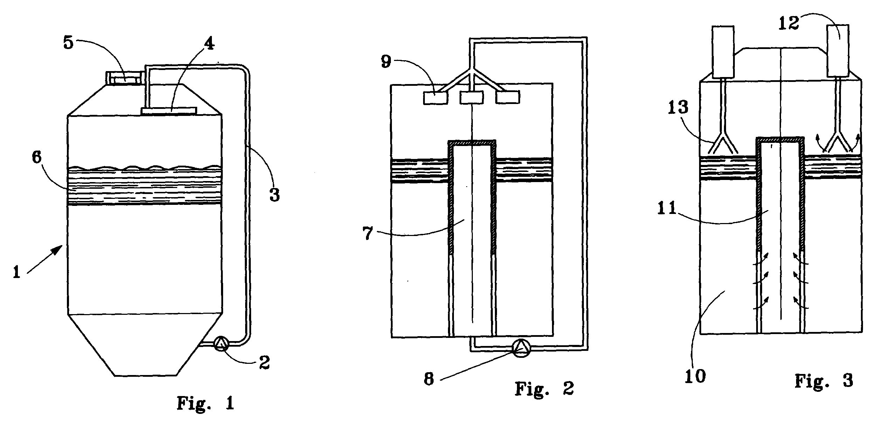

The most common fermenters of known type are schematically illustrated in the annexed figures 1 to 6.

For example, one type of known fermenter (see figure 1) is constituted by a container 1 open at the top, fitted with a pump 2 which pumps must from the bottom of the container and conveys it through a pipe 3 to the top part of the container, from which it flows along a rotary arm 4 (driven by a motor 5) which causes the must to spill onto the layer of marc shown as 6.

Another fermenter of known type, illustrated in figure 2, comprises a container with a perforated central pipe 7; a pump 8 sucks the must from the said pipe 7 and conveys it to a set of upper outlets 9, through which it is sprayed onto the layer of marc.

Another apparatus of known type (figure 3) comprises a tank 10 with a central tube 11 and a number of pistons 12 at the top; the said pistons move the same number of blades 13, consisting of a pair of paddles hinged to the piston rod which open when they are lowered to press on the marc and push it downwards.

The effect of the pressure exerted is that part of the must rises up central pipe 11, exits at the top and spills onto the marc, thus moistening it.

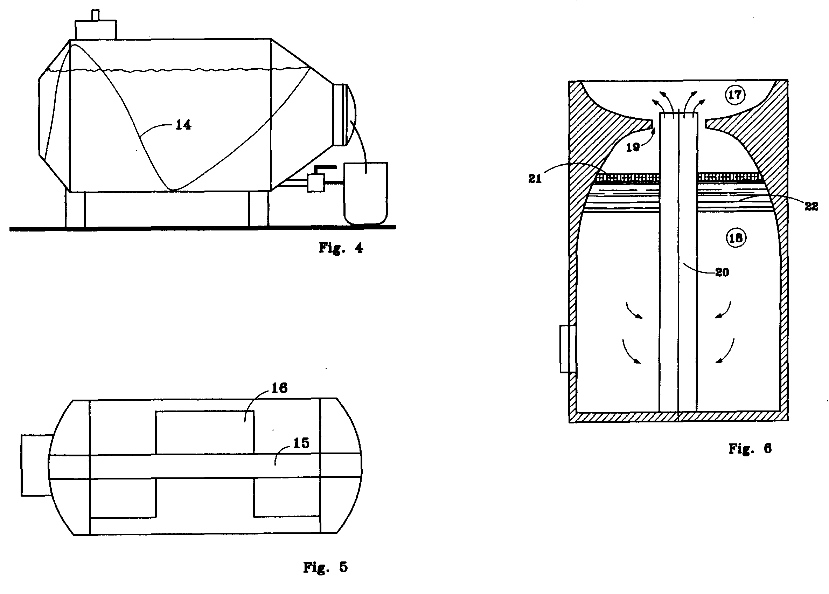

Other types of known apparatus, illustrated in figures 4 and 5, consist of basically cylindrical, rotating, horizontal-axis containers.

In some cases (figure 4) the container is fitted with a propeller 14 on the perimeter which, when rotated, stirs the marc and pushes it to one end of the container, from which it is discharged. In the other case (figure 5), the container has a shaft 15 fitted with a number of blades 16 which stir the contents, keeping the marc immersed in the must. Finally, a domed vat (see figure 6) is known; this apparatus consists of a container divided horizontally into two parts 17 and 18 which communicate with one another through a hole 19 in the separating structure.

The domed vat is completed by a pipe 20 with a hole in the lower part and a grid 21 which is fixed to the pipe inside the container after the pressed grapes have been introduced into the container.

The cap of marc 22 which collects against grid 21 prevents the exit of the carbon dioxide developed during fermentation, and the resulting pressure increase causes the must to rise up pipe 20 into upper tank 17, from which it returns to lower tank 18 through gap 19 to moisten the marc.

All these systems involve some disadvantages or limitations, however.

First of all, open vats require special care to ensure that no foreign bodies can enter the vat.

In addition, most known systems require the use of mechanical systems to stir the must.

The present invention is comprised in this sector; it offers a wine-making plant of a totally closed type in which the must is moved by exploiting the pressure that develops in the vat as a result of fermentation.

This and other characteristics will emerge more clearly from the following detailed description, provided by way of example but not of limitation, by reference to the annexed drawings in which:

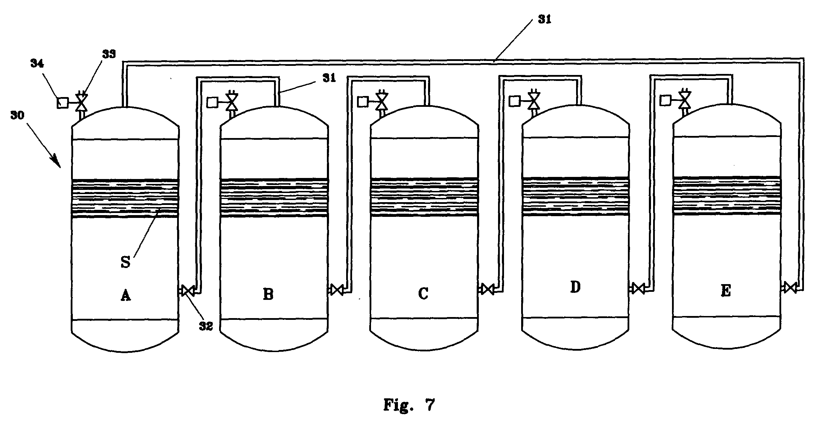

- figure 7 schematically illustrates a wine-making plant in accordance with the invention

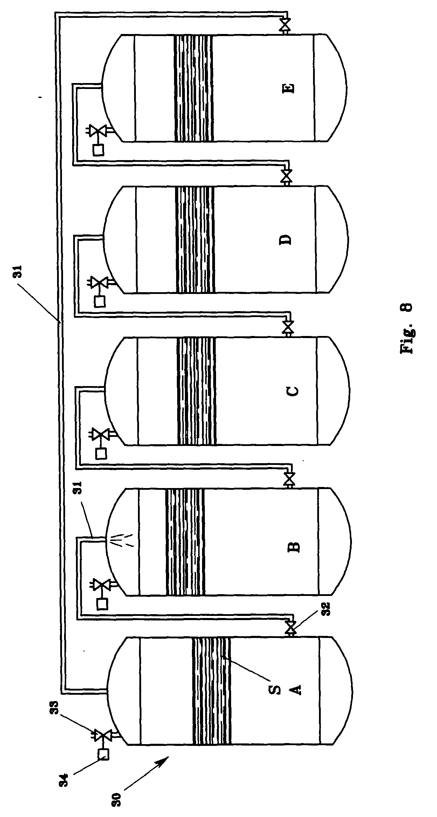

- figure 8 illustrates the plant shown in figure 7 during the wine-making stage

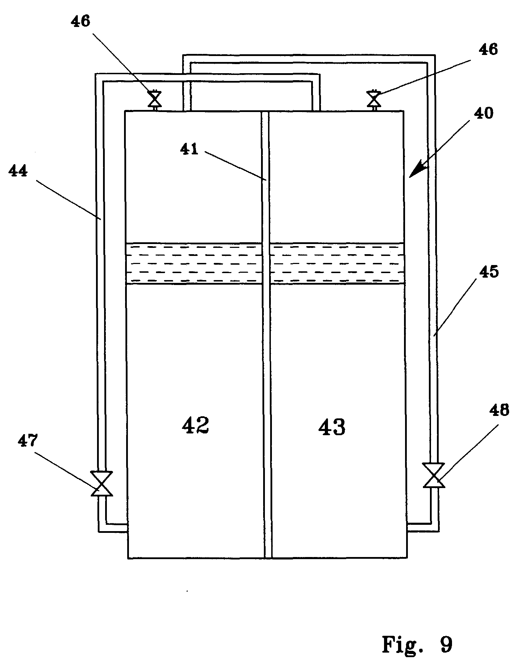

- figure 9 schematically illustrates a different form of construction of the plant, of small size

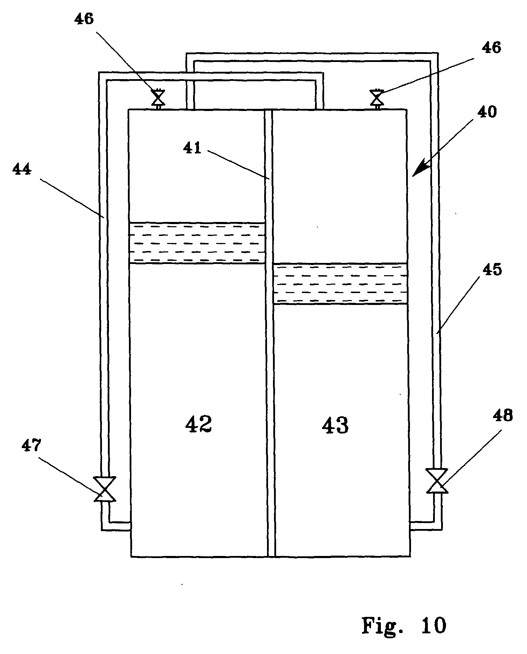

- figure 10 illustrates the plant shown in figure 9 during the wine-making stage.

By reference to figure 7, the plant in accordance with the invention comprises a number of containers A, B, C, D, and E, preferably but not necessarily cylindrical containers with a vertical axis, indicated as 30, connected in series by pipes or conduits 31, each of which connects the base or lower part of one container to the upper part of the next or adjacent container.

A manually-operated stop valve 32 is fitted to each pipe 31, and a pressure relief valve 33 is fitted to the upper wall of each container.

The said pressure relief valve, which may also be manually operated, is connected to a device of known type, shown as 34, which detects the pressure in the container, opens the valve when the said pressure reaches a preset value, and closes it when the said pressure falls to another preset value.

The plant operates as follows.

Each container is filled with must and marc up to a given height; after a while the marc rises to the surface, where it forms a floating layer indicated in the figure by the letter S.

Pressure relief valves 33 are closed and stop valves 32 fitted to pipes 31 which connect the adjacent containers to one another are opened.

A considerable amount of carbon dioxide develops during fermentation of the must, and this causes the pressure in the containers to rise.

As valves 32 are open, the containers communicate with one another, and the pressure stabilises at the same value in each container.

When necessary or when the pressure reaches a preset value, all but one of valves 32 are closed (for example all except the valve on the pipe connecting container A to container B), following which pressure relief valve 33 fitted to the upper wall of container B is opened.

The pressure in container B is thus discharged to the exterior, causing the pressure in that container to fall.

The higher pressure now present in the upstream container (in this case, container A) forces the must along pipe 31, thus pumping part of the liquid from the bottom of container A to the top of container B, where it spills down onto the must, thus moistening it.

Pressure relief valve 33 on container B is then closed, so that when the pressure balance between the two containers is restored, the passage of liquid along pipe 31 ceases.

The situation is now as illustrated in figure 8; the first two containers are at the same pressure, but contain different quantities of liquid.

If necessary, fermentation is allowed to continue until the pressure in container B rises, after which valve 32 on the pipe connecting container A to container B is closed, valve 32 on the pipe connecting container B to container C is opened, and the pressure relief valve on container C is opened; the pressure in container C is thus released to the exterior, causing the pressure in container C to fall to a lower value than the pressure in container B.

The difference in pressure thus created forces part of the must in container B to rise up the pipe and spill down into container C, thus moistening the marc.

The same operation is then repeated for all the subsequent containers, until the situation shown in figure 7 is reached, ie. the same amount of must is present in all containers, and the pressure in all containers is equal.

A special preferred version of the plant, designed for making small amounts of wine, is illustrated in figure 9.

That plant basically consists of a sealed container 40, internally divided by a wall 41 into two chambers shown as 42 and 43.

A pipe 44 connects the bottom of chamber 42 to the top of chamber 43. A second pipe 45 connects the bottom of chamber 43 to the top of chamber 42.

Manually-operated stop valves 47 and 48 are fitted to pipes 44 and 45, respectively.

Pressure relief valves 46, similar to those described for the plant shown in figure 7, are filled to the upper walls of chambers 42 and 43.

This apparatus operates in a similar way to the one previously described. After the chambers have been filled to a given level with must, valves 46 are closed and valves 47 are opened.

During fermentation, the pressure in the two chambers increases to an approximately equal extent.

When pressure relief valve 46 in a first chamber, for example chamber 42, is opened, with valves 47 and 48 in closed position, the pressure in that chamber will fall.

The higher pressure then present in chamber 43 forces part of the must to rise up pipe 45 and spill down into chamber 42, thus moistening the marc.

The situation will then be as illustrated in figure 10. If the pressure relief valve in chamber 43 is opened, the pressure in that chamber will fall to a lower value than the pressure in chamber 42.

The reverse process then takes place, ie. liquid flows from chamber 42 to chamber 43 until an equal balance of pressure is restored.

In this way liquid is transferred from one chamber to another, and the marc is kept moist, with no need for specific equipment, merely by exploiting the pressure of the gas that develops in the containers during fermentation.

## Claims

1. Wine-making plant, characterised by the fact that it comprises:
• a number of sealed containers designed to contain the must;
• a set of pipes, each of which connects the bottom of one container to the top of the adjacent container;
• pressure relief systems designed to place the top of each container in communication with the exterior, independently of the other containers.

2. Wine-making plant as claimed in claim 1, in which more than two containers are present, characterised by the fact that stop valves are fitted to the pipes connecting each container to the adjacent one.

3. Wine-making plant as claimed in claim 1, characterised by the fact that it consists of
(i) a single container separated internally by a wall into two chambers,
(ii) a pipe that connects the bottom of each chamber to the top wall of the adjacent one, and
(iii) systems fitted to the top of the said chambers which are designed to release the pressure that develops in the said chambers.

4. Wine-making plant as claimed in claim 3, in which more than two containers are present, characterised by the fact that stop valves are fitted to the pipes connecting each container to the adjacent one.

5. Wine-making method, characterised by the fact that it comprises the following steps:
• the must is introduced into a set of closed containers, each connected by a pipe that leads from the bottom part of one container to the top part of the adjacent one;
• the communicating passage between the said containers is left open until a preset pressure is reached;
• the communicating passage between the said containers is then closed for all the containers except for two of them;
• pressure is released from one of the said two containers until the higher pressure in the adjacent container forces part of the must to rise up the communication pipe and moisten the marc;
• the communicating passage between the said two containers is then closed;
• when the pressure in all the containers again reaches said preset value, the same procedure is employed for the subsequent containers.

6. Wine-making method according to claim 5, wherein the communicating passage between the said two containers is closed after the pressure in all the containers again reaches said preset value.
